# EUROPÄISCHE PATENTANMELDUNG

(11) **EP 0 805 174 A1**
(43) Veröffentlichungstag der Anmeldung: **05.11.1997**
(21) Anmeldenummer: 97106917.4
(22) Anmeldetag: 25.04.1997
(51) Int. Cl.: C08J 3/00, B01F 5/10

(54) **Verfahren zur Konfektionierung von Polymerdispersionen**

(30) Priorität: 29.04.1996 DE 19617183
(71) Anmelder: BASF AKTIENGESELLSCHAFT, 67056 Ludwigshafen (DE)
(72) Erfinder: Rehmer, Gerd, Dr., 67259 Beindersheim (DE); Holtrup, Walter, 67227 Frankenthal (DE); Schwarz, Karlheinz, 67067 Ludwigshafen (DE)
(74) Vertreter: Isenbruck, Günter, Dr.

(57) **Zusammenfassung**

Verfahren zur Konfektionierung von Polymerdispersionen, wobei die Polymerdispersion aus einem Kessel (7) mit einer Rührvorrichtung (6) durch eine Leitung (3) mit einer Mischvorrichtung (2) mittels einer in der Leitung (3) befindlichen Pumpe (4) umgewälzt wird und vor dem Eintritt der umgewälzten Polymerdispersion in die Mischvorrichtung (2) mindestens eine Lösung oder Dispersion mindestens eines Konfektionierungsmittels aus mindestens einem Vorratsbehältnis (5) über eine Zufuhrleitung (9) in die umgewälzte Polymerdispersion dosiert wird.

## Beschreibung

Die Erfindung betrifft ein Verfahren zur Konfektionierung von Polymerdispersionen.

Dispersionen sind Systeme aus einer kontinuierlichen Phase (Dispergiermittel) und mindestens einer diskontinuierlichen Phase (Dispergenz, dispergierte Phase). Die Dispergiermittel sind stets fluid und können Flüssigkeiten oder Gase sein. Die dispergierten Phasen sind stets kondensiert; sie sind Festkörper oder Flüssigkeiten.

Bei Polymerdispersionen ist die dispergierte Phase stets ein Polymeres und das Dispergiermittel immer eine Flüssigkeit, sehr oft Wasser.

Polymerdispersionen werden durch zwei verschiedene Methoden hergestellt. Am häufigsten polymerisiert man Monomere unter Zusatz von Dispergierhilfsmitteln durch Emulsions-, Dispersions- oder Suspensionspolymerisation. Daneben werden auch anderweitig hergestellte Polymere nachträglich dispergiert.

Polymerdispersionen werden für verschiedene Anwendungszwecke kopfektioniert. So werden den Dispersionen Konservierungsmittel (sogenannte Mikrobiozide) zugesetzt, um sie z.B. vor Bakterien- oder Pilzbefall zu schützen. In anderen Fällen können den Dispersionen sogenannte Filmbildungshilfsmittel oder Verlaufmittel für ihre Verwendung zur Herstellung in Anstrichmitteln zugesetzt werden. Andere Konfektionierungsmittel sind sogenannte Entschäumer, die den Dispersionen zugesetzt werden, um die Schaumbildung in den Verarbeitungsprozessen zu vermeiden. Als weitere Konfektionierungsmittel sind beispielhaft Natur- oder Kunstharzemulsionen oder auch Lösungen, die Haftklebstoffdispersionen zugesetzt werden, um verschiedene Anwendungsgebiete zu erschließen, insbesondere klebrig machende Harzemulsionen, sogenannte Tackifier, zu nennen.

In vielen Fällen führt das Eintragen derartiger Konfektionierungsmittel in Dispersionen zur Bildung von Verklumpungen, die auch als Koagulat oder Stippen bezeichnet werden. Diese müssen aus den Dispersionen durch einen hohen Filtrationsaufwand entfernt werden.

Das übliche Verfahren, Konfektionierungsmittel zuzusetzen besteht darin, die Dispersion zu rühren und das Konfektionierungsmittel direkt in den Kessel zu dosieren. Derartige Verfahren haben den Nachteil, daß es häufig zur Koagulatbildung kommt oder auch die entstehenden Mischungen nicht ausreichend stabil sind, was sich darin äußert, daß es zu einer Aufrahmung in der Dispersion kommt. Die Verwendung von Dispersionen in Lacksystemen oder als Bindemittel zur Folienkaschierung erfordert aber koagulat- bzw. stippenarme Dispersionen.

Der wirtschaftliche Nachteil dieser herkömmlichen Mischtechniken besteht nicht nur in dem hohen Filtrationsaufwand, sondern auch darin, daß die Konfektionierungsmittel bei der Verklumpung zum Teil eingeschlossen werden und deshalb ihre Wirksamkeit nicht voll entfalten können. In vielen dieser Fälle muß Konfektionierungsmittel nachdosiert werden, wobei wiederum die genannten Probleme auftreten.

Vielfach wurde in der Vergangenheit versucht, die oben genannten Nachteile dadurch zu umgehen, daß die Konfektionierungsmittel verdünnt wurden oder eine feinere Dosierung über eine längere Dosierzeit hinweg durchgeführt wurde. Dies hat den Nachteil, daß der Konfektionierkessel überdurchschnittlich lange durch den Konfektionierungsschritt belegt ist. Die geringere Verfügbarkeit des Kessels senkt die Wirtschaftlichkeit des Verfahrens.

Ein Verfahren zur Überwindung der oben genannten Schwierigkeiten, insbesondere der Beseitigung der langen Belegdauer des Kessels durch den Konfektionierungsschritt, stellt das sogenannte Mischen im Durchlauf (In-Line-Dispergieren) dar. Dabei handelt es sich um ein kontinuierliches Verfahren, in dem zwei oder mehr Phasen in Kontakt miteinander gebracht werden. Dieses Verfahren ist u.a. von F. Streiff in *Maschinenmarkt* 83 (1977) 17, S. 289 - 295 beschrieben; entsprechende Vorrichtungen zur Durchführung dieses Verfahrens werden seit einigen Jahren von der Firma S 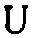 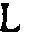 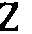 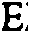 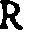 C 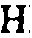 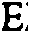 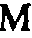 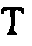 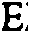 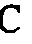 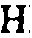 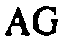 angeboten und vertrieben.

Innerhalb dieses Verfahrens wird die Polymerdispersion aus einem Kessel über eine Leitung, in der eine Pumpe und eine Mischvorrichtung eingebaut sind, in einen zweiten Kessel überführt. Zwischen der Pumpe und dem Mischer ist eine Zuführleitung vorgesehen, über die das Konfektionierungsmittel aus einem Vortatsbehältnis heraus kontinuierlich zugeführt wird. Dieses Verfahren ist dahingehend nachteilig, daß zu seiner Durchführung ein zweiter Kessel zur Aufnahme des Gemischs aus Polymerdispersion und Konfektionierungsmittel nötig ist. Sofern eine kontinuierliche Mischvorrichtung als Mischvorrichtung eingesetzt wird, weist dieses Verfahren ferner den Nachteil auf, daß nicht selten die Vermischung des Konfektionierungsmittels und der Polymerdispersion nicht ausreichend ist.

Demgemäß lag der vorliegenden Erfindung die Aufgabe zugrunde, ein Verfahren zur Kontektionierung von Polymerdispersionen bereit zu stellen, das es ermöglichen sollte, zum einen eine ausreichende Vermischung zwischen Konfektionierungsmittel und der Polymerdispersion zu erreichen und darüber hinaus mit relativ geringem apparativem Aufwand durchführbar sein sollte.

Es wurde nunmehr überraschenderweise gefunden, daß die Konfektionierung von Polymerdispersionen nach dem nachfolgend geschilderten Verfahren eine Lösung der obigen Aufgabe darstellt und die Nachteile des Standes der Technik überwindet, d.h. zu kürzeren Konfektionierungszeiten, zu deutlich weniger Koagulat, zur Reduzierung des Filtrationsaufwandes und damit zu einer insgesamt besseren Wirtschaftlichkeit führt.

Die Erfindung betrifft somit ein Verfahren, dadurch gekennzeichnet, daß die Polymerdispersion aus einem Kessel (7) mit einer Rührvorrichtung (6) durch eine Leitung (3) mit einer Mischvorrichtung (2) mittels einer in der Leitung befindlichen Pumpe (4) umgewälzt wird und vor dem Eintritt der umgewälzten Polymerdispersion in die Mischvorrichtung (2) mindestens eine Lösung oder Dispersion mindestens eines Konfektionierungsmittels aus mindestens einem Vorratsbehältnis (5) über eine Zuführleitung (9) in die umgewälzte Polymerdispersion dosiert wird.

Als Pumpen [(1)/(4)] können herkömmliche Chemiepumpen wie Schlauchpumpen, Druckluftmembranpumpen, Excenterschneckenpumpen, vorzugsweise Excenterschneckenpumpen mit frequenzgeregeltem Antrieb, und Zahnradpumpen eingesetzt werden.

Als Rührer (6) innerhalb des Kessels (7) bzw. als Rührer (11) innerhalb des Vorratsbehältnisses (5) können herkömmliche Rührer, wie z.B. Anker-Propeller, MIG-, und Blattrührer eingesetzt werden.

Als Mischvorrichtung [(2), (8)] können dynamische oder statische Mischvorrichtungen verwendet werden (dynamische Mischer sind beschrieben in: E. Wullenweber, *Chemie-Anlagen und -Verfahren*, Heft 4/1970, Konradin-Verlag, Stuttgart). Bevorzugt werden statische Mischvorrichtungen wegen ihrer außerordentlichen Robustheit und der damit verbundenen geringen Reparaturanfälligkeit verwendet.

Beispielhaft sind hierbei die statischen Mischer der Firma S 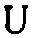 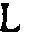 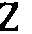 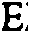 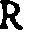 C 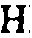 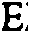 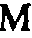 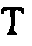 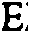 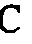 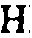 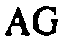 zu nennen. Dabei sind, je nach Anwendungsgebiet, Sulzer-Mischer vom Typ SMV, der hauptsächlich für das Mischen von niederviskosen Flüssigkeiten im turbulenten Strömungsbereich eingesetzt wird, der Sulzer-Mischer vom Typ SMX für viskose Flüssigkeiten oder für Flüssigkeiten mit großem Viskositätsunterschied, sowie der Sulzer-Mischer vom Typ SMXL, der vorwiegend Verwendung bei der Verstärkung des Wärmeübergangs beim Aufwärmen oder Abkühlen von temperaturempfindlichen viskosen Produkten oder zum Mischen bei langen Mischstrecken mit sehr kleinen Druckabfällen verwendet werden kann, einsetzbar.

Sofern niederviskose Flüssigkeiten eingesetzt werden, strömen diese meist turbulent und können, wie oben erwähnt, mit dem Sulzer-Mischer Typ SMV gemischt werden. Der Produktstrom wird dabei durch die offenen, sich kreuzenden Mischerelementkanäle in einzelne Ströme aufgeteilt. Diese weisen eine ausgeprägte Querströmung auf. Ferner wird an jeder Kreuzungsstelle eine Teilmenge in den benachbarten Kanal abgeschert. Inhomogenitäten gleichen sich somit zwischen den Lamellen der Mischelemente aus. Damit ein gleichmäßiger Ausgleich über den ganzen Strömungsquerschnitt erzielt wird, sind die Mischelemente jeweils um 90 Grad zueinander versetzt angeordnet.

Wie oben erwähnt, werden mit dem Sulzer-Mischer Typ SMX laminar strömende, viskose Flüssigkeiten oder solche mit großen Zähigkeitsunterschieden gemischt. Durch die zur Rohrachse quer angeordneten Stege werden die Komponenten laufend in Schichten zerschnitten und über den Rohrquerschnitt ausgebreitet. Die Schichtenzahl nimmt mit zunehmender Anzahl von Mischelementen rasch zu.

Bezüglich weiterer Details zu den oben genannten Mischer-Typen wird auf die Übersicht von André Gather, *Kontakt erwünscht*, *Maschinenmarkt*, Würzburg 98 (1992) 27, S. 18 - 23, verwiesen.

Selbstverständlich können auch Mischvorrichtungen anderer Firmen, die ähnlich ausgelegt sind, eingesetzt werden.

Im erfindungsgemäßen Verfahren können alle herkömmlichen Polymerdispersionen konfektioniert werden. Beispielhaft sind die in den US-A 2,754,280 und 2,759,564, die in den EP-B 0 037 923 und 0 065 253 und in den DE-A 35 43 361 oder 37 12 860 beschriebenen Emulsions(co)polymerisate zu nennen.

Vorzugsweise handelt es sich bei der im Rahmen des erfindungsgemäßen Verfahrens behandelten Polymerdispersion um eine wäßrige Polymerdispersion.

Insbesondere wird das erfindungsgemäße Verfahren zur Konfektionierung von Polymerdispersionen für Anstrich- und Klebemittel eingesetzt.

Als Konfektionierungsmittel können ebenfalls alle herkömmlichen Konfektionierungsmittel im Rahmen des hier in Rede stehenden Verfahrens eingesetzt werden. Beispielhaft zu nennen sind Konservierungsmittel (Mikrobiozide), Filmbildungshilfsmittel, Verdickungsmittel, Verlaufsmittel, Entschäumer, Natur- oder Kunstharzemulsionen oder andere Tackifier-Lösungen, oder Gemische eines oder mehrerer der oben genannten Konfektionierungsmittel.

Die Konfektionierungsmittel können in unverdünnter oder verdünnter Form, nacheinander oder bei der Verwendung mehrerer Konfektionierungsmittel auch als Gemisch dosiert werden. Die Dosierung erfolgt entweder mittels einer weiteren Pumpe (1) oder durch Druck über die Zufuhrleitung (9). Bei der Verwendung von Konfektionierungsmittelgemischen ist es in Einzelfällen vorteilhaft, wenn das Konfektionierungsmittelgemisch eine zusätzliche Mischvorrichtung (8) passiert, bevor es in den Dispersionsstrom gelangt. Konfektionierungsmittelgemische können z.B. aus Filmbildungshilfsmitteln und Entschäumern bestehen.

Somit betrifft die vorliegende Erfindung auch ein Verfahren, wobei in die Zufuhrleitung (9) für das mindestens eine Konfektionierungsmittel eine weitere Mischvorrichtung (8) eingebaut ist oder das Vorratsbehältnis (5) mit einer Rührvorrichtung (11) versehen ist oder eine Mischvorrichtung (8) in der Zufuhrleitung (9) eingebaut ist und das Vorratsbehältnis (5) mit einer Rührvorrichtung (11) versehen ist.

Unbedingt erforderlich ist eine derartige zusätzliche Mischvorrichtung (8), sofern im Rahmen des vorliegenden Verfahrens nicht mischbare Konfektionierungsmittel als Gemisch dosiert werden. In derartigen Fällen ist es notwendig, daß das Vorratsbehältnis (5) ebenfalls mit einer Rührvorrichtung (11), die gleich oder verschieden von der Rührvorrichtung (6) sein kann, versehen ist.

Im Rahmen des Verfahrens gemäß der vorliegenden Erfindung kann das Konfektionierungsmittel über die Zufuhrleitung (9) in eine Polymerdispersion mit einem Umsetzungsgrad von 99 % oder mehr oder in eine Polymerdispersion mit einem Umsetzungsgrad von ungefähr 80 % bis unter 99% zudosiert werden. Ferner muß innerhalb der Leitung während der Durchführung des Verfahrens ein Mindestdurchfluß bestehen. Wird der Durchfluß zu stark reduziert, kann es zu vermehrter Koagulatbildung kommen, so daß es nicht mehr gelingt, den bei der Durchführung des erfindungsgemäßen Verfahrens angestrebten Koagulatanteil innerhalb der Dispersion bei 0,1 % oder weniger, vorzugsweise bei 0,01 % oder weniger, zu halten.

Damit während des Durchlaufens der Dispersion durch die Leitung (3) keine zusätzliche Verklumpung auftritt, darf die Lösung während der Zugabe der Konfektionierungsmittel innerhalb der Leitung keineswegs stehen.

Der Mindestdurchfluß muß in Abhängigkeit vom Konfektionierungsmittel bestimmt werden. Er wird im Einzelfall nach dem Fachmann bekannten Methoden über den Koagulatanteil der Dispersion ermittelt. Sofern dieser Koagulatanteil zu hoch ist, wird die Pumpleistung der Pumpe (4) erhöht, die jedoch nach oben hin begrenzt ist, da es auch in Folge von Scherung zu Koagulation kommen kann.

Um Schaumbildung während der Konfektionierung zu vermeiden, ist es oftmals von Vorteil, wenn innerhalb des Kessels (7) ein gegenüber dem Umgebungsdruck reduzierter Druck herrscht.

Eventuell innerhalb des Kessels (7) auftretende oder der Dispersion inhärente geringe Anteile an Koagulat, die in Form von Klumpen oder Stippen vorliegen, kann durch eine zusätzliche Filtereinrichtung (10) zum Entfernen fester oder gelförmiger Teilchen, die innerhalb der Leitung (3) druck- oder saugseitig bzgl. der Pumpe (4) eingebaut wird, entfernt werden. Vorzugsweise befindet sich diese Filtereinrichtung innerhalb der Leitung (3) zwischen der Pumpe (4) und dem Einlaß der Zuführleitung, d.h. druckseitig. Sollte dies erforderlich sein, kann selbstverständlich eine derartige Filtervorrichtung auch innerhalb der Zufuhrleitung (9) des Konfektionierungsmittels eingebaut werden, wobei diese zusätzliche Filtereinrichtung vor der Pumpe (1), zwischen der Pumpe (1) und der Mischvorrichtung (8) oder nach der Mischvorrichtung (8) bis unmittelbar vor der Stelle, an der die Zufuhrleitung (9) in die Leitung (3) mündet, angeordnet werden.

Sollten innerhalb der Dispersion größere Mengen an derartigem Koagulat vorliegen, kann es ggf. erforderlich sein, Konfektionierungsmittel nachzudosieren, da dieses in teilweise eingeschlossener Form zusammen mit dem Koagulat durch Filtration entfernt worden ist, was ggf. zu einer Veränderung des Mischungsverhältnisses Dispersion/Konfektionierungsmittel führen kann, was unerwünscht ist. Die Konfektionierungsmittel können je nach Anwendungsfall im allgemeinen bis zu etwa 20 Gew.-%, in Einzelfällen auch in höheren Anteilen bis zu 50 Gew.-%, jeweils bezogen auf die Polymerdispersion, eingesetzt werden.

Derartige Konfektionierungsmittel sind z.B. Formulierungen des 1,2-Benzisothiazolin-3-on Natriumsalze in einem Gemisch aus Wasser und Propylenglykol, wie z.B. Proxel XL2 der Fa. ICI, Formulierungen biozider (Chlor)isothiazolone, wie z.B. Aktizid LA der Fa. THOR CHEMIE GmbH, Kathon LX plus der Fa. ROHM & HAAS.

Weitere Konfektionierungsmittel sind z.B. Diole wie Butylglykol, Butyldiglykol, Diethylenglykol, Alkohole, wie z.B. Ethanol, iso-Propanol und Octadecanol-1, Lösungsmittel wie Lusolvan FBH (BASF AG), Komplexbildner z.B. auf der Basis von Ethylendiamintetraessigsäure, z.B. Trilon B Flüssig (BASF AG), synthetische Harzlösungen wie z.B. die wäßrigen Lösungen von Polyvinylmethylethern, wie z.B. Lutonal M 40 (BASF AG), Lösungen von Ammoniumpolyacrylaten, wie z.B. Collacral P (BASF AG), Weichmacher, wie z.B. Dibutylphthalat, z.B. Palatinol C (BASF AG), anionische Dispersionen von Montanesterwachs, wie z.B. Gleitmitteldispersion 8645 (BASF AG), chemische Verbindungen wie z.B. Harnstoff und Ethylenharnstoff, Natronlauge, Kalilauge, Ammoniak, Calciumhydroxid, Zinknitrat, Zinkoxid, Emulgatoren, wie z.B. Alkylphenolethoxylate, z.B. Emulgator 825 (BASF AG), Blockcopolymerisate auf der Basis von Propylen- und Ethylenoxid, Entschäumer wie z.B. Dapro DF 900 der Fa. KRAHN CHEMIE GmbH und Byk-033 der Fa. BYK-CHEMIE GmbH, Wesel, Nopco 8034 E/D der Fa. HENKEL KGaA, Verbindungen wie Benzophenon, Lösungsmittelmittel wie Testbenzin und Aceton, Polyvinylalkohole etc., modifizierte Kollophoniumharze, wie z.B. Tacolyn 3179 der Fa. HERCULES, Permatac A751 der Fa. ALLIANCE TECHNICAL PRODUCTS (ATP), Snowtac-Typen der Fa. AKZO NOBEL.

Ferner können im Rahmen des vorliegenden Verfahrens innerhalb des erfindungsgemäßen Mischkreises in der Leitung (3) oder der Zuführleitung (9) oder sowohl in der Leitung (3) und der Zuführleitung (9) eine Vorrichtung zur Bestimmung des pH-Werts der Dispersionen und/oder eine Vorrichtung zur Bestimmung der Viskosität der Dispersionen zusätzlich eingebaut werden.

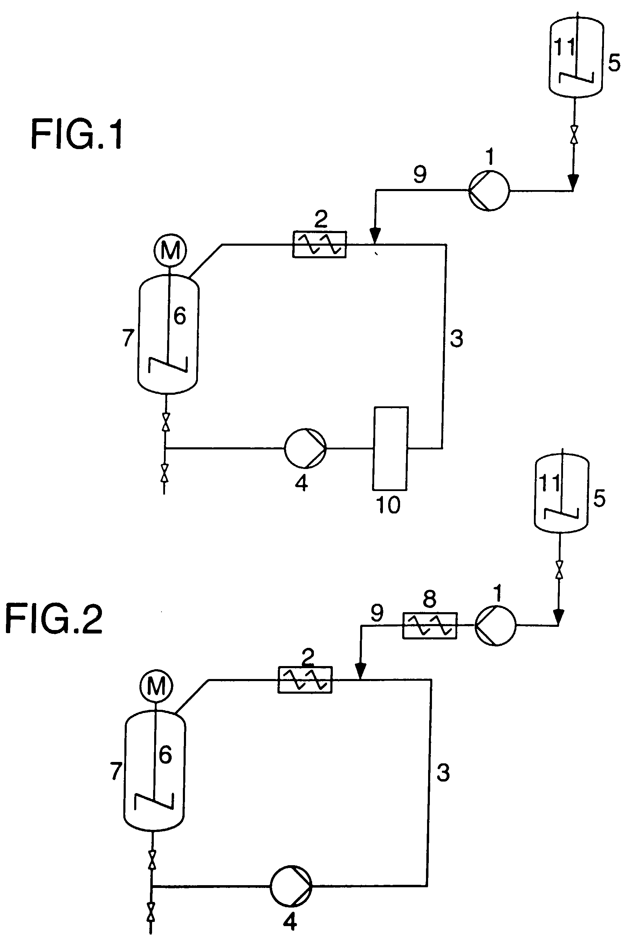

Figuren 1 und 2 zeigen Mischkreise, die das erfindungsgemäße Verfahren veranschaulichen sollen, wobei der Mischkreis gemäß Fig. 1 zusätzlich eine Filtervorrichtung (10) aufweist und der Mischkreis gemäß Fig. 2 zusätzlich eine Mischeinrichtung (8) in der Zufuhrleitung (9) zum Zuführen des Konfektionierungsmittels aufweist.

Das erfindungsgemäße Verfahren soll nunmehr anhand von Beispielen weiter erläutert werden.

### BEISPIELE

Der in den untenstehenden Beispielen angegebene Siebrückstand wurde analog der DIN 53786 wie folgt bestimmt.

In Abwandlung der DIN 53786 wurden jeweils 1 kg der gemäß den Beispielen konfektionierten Dispersion für ein Sieb der Maschenbreite von 0,125 mm filtriert. Der Rückstand wurde mit entionisiertem Wasser ausgewaschen und getrocknet. Anschließend wurde der Siebrückstand ausgewogen. Die Angabe erfolgt in Gew.-%, jeweils bezogen auf das Gesamtgewicht der Dispersion.

### Vergleichsbeispiel

In einem Rührkessel mit MIG-Rührer wurde zu 10 t einer Polymerdispersion für Anstrichzwecke eines Copolymerisats aus 49,2 Gew.-% n-Butylacrylat, 45,4 Gew.-% Styrol, 2,9 Gew.-% Acrylamid und 2,5 Gew.-% Acrylsäure innerhalb einer Stunde 100 kg Butyldiglykol dosiert und eine weitere halbe Stunde nachgerüht. Anschließend wurde der Siebrückstand bestimmt. Der Koagulationsanteil betrug 0,132 %.

### Beispiel

In einem Rührkessel mit einem Mischkreis gemäß Fig. 1 wurden zu 10 t der gleichen Polymerdispersion wie im Vergleichsbeispiel 100 kg Butyldiglykol innerhalb von 30 Minuten zudosiert und nach der Dosierung noch 5 Minuten unter Rühren umgepumpt. Anschließend wurde ebenfalls der Siebrückstand bestimmt. Der Koagulationsanteil betrug 0,008 %.

## Patentansprüche

1. Verfahren zur Konfektionierung von Polymerdispersionen, **dadurch gekennzeichnet**, daß die Polymerdispersion aus einem Kessel (7) mit einer Rührvorrichtung (6) durch eine Leitung (3) mit einer Mischvorrichtung (2) mittels einer in der Leitung (3) befindlichen Pumpe (4) umgewälzt wird und vor dem Eintritt der umgewälzten Polymerdispersion in die Mischvorrichtung (2) mindestens eine Lösung oder Dispersion mindestens eines Konfektionierungsmittels aus mindestens einem Vorratsbehältnis (5) über eine Zufuhrleitung (9) in die umgewälzte Polymerdispersion dosiert wird.

2. Verfahren nach Anspruch 1, dadurch gekennzeichnet, daß in die Zufuhrleitung (9) für das mindestens eine Konfektionierungsmittel eine weitere Mischvorrichtung (8) eingebaut ist oder das Vorratsbehältnis (5) mit einer Rührvorrichtung (11) versehen ist oder eine Mischvorrichtung (8) in der Zufuhrleitung (9) eingebaut ist und das Vorratsbehältnis (5) mit einer Rühvorrichtung (11) versehen ist.

3. Verfahren nach Anspruch 1 oder 2, dadurch gekennzeichnet, daß mindestens eine der beiden Mischvorrichtungen [(2)/(8)] eine statische Mischvorrichtung ist.

4. Verfahren nach einem der Ansprüche 1 bis 3, dadurch gekennzeichnet, daß in der Leitung (3) eine Filtervorrichtung (10) druck- oder saugseitig bzgl. der Pumpe (4) zum Entfernen fester oder gelförmiger Teilchen eingebaut ist.

5. Verfahren nach einem der Ansprüche 1 bis 4, dadurch gekennzeichnet, daß in der Leitung (3) oder der Zufuhrleitung (9) oder sowohl in der Leitung (3) als auch in der Zuführleitung (9) eine Vorrichtung zur Bestimmung des pH-Werts der Lösung(en) oder eine Vorrichtung zur Bestimmung der Viskosität der Lösung(en) oder eine Vorrichtung zur Bestimmung des pH-Werts der Lösung(en) und eine Vorrichtung zur Bestimmung der Viskosität der Lösung(en) eingebaut sind.

6. Verfahren nach einem der Ansprüche 1 bis 5, dadurch gekennzeichnet, daß es sich bei der Polymerdispersion um eine wäßrige Polymerdispersion handelt.

7. Verfahren nach mindestens einem der Ansprüche 1 bis 6, dadurch gekennzeichnet, daß es sich bei der Polymerdispersion um eine Dispersion für Anstrich- oder Klebemittel handelt.

8. Verfahren nach einem der Ansprüche 1 bis 7, dadurch gekennzeichnet, daß als Konfektionierungsmittel Konservierungsmittel, Filmbildungshilfsmittel, Verdickungsmittel, Verlaufsmittel, Entschäumer, Natur- oder Kunstharzemulsionen oder andere Tackifier-Lösungen oder deren Gemische eingesetzt werden.

9. Verfahren nach einem der Ansprüche 1 bis 8, dadurch gekennzeichnet, daß das Konfektionierungsmittel über die Zufuhrleitung (9) in eine Polymerdispersion mit einem Umsetzungsgrad von 99 % oder mehr oder in eine Polymerdispersion mit einem Umsetzungsgrad von 80% bis unter 99 % zudosiert wird.

10. Verfahren nach einem der Ansprüche 1 bis 9, dadurch gekennzeichnet, daß innerhalb des Kessels (7) ein verglichen mit dem Umgebungsdruck geringerer Druck herrscht.
